# EUROPEAN PATENT APPLICATION

(11) **EP 1 503 118 A1**
(43) Date of publication of application: **02.02.2005**
(21) Application number: 04254558.2
(22) Date of filing: 29.07.2004
(51) Int. Cl.: F16K 1/46

(54) **Seal**

(30) Priority: 31.07.2003 US 631191
(71) Applicant: Ross Operating Valve Company, Troy, Michigan 48084 (US)
(72) Inventor: Foster, Joseph E, Sterling Heights, Michigan 48313 (US)
(74) Representative: Giles, Ashley Simon

(57) **Abstract**

A valve assembly has a movable valve element with a first face surface. A valve seat is provided having a second face surface for forming a face seal with the first face surface, wherein one of the first face surface and the second face surface includes a cavity sunk into the one face surface. The cavity has a peripheral bearing surface. An o-ring is inserted into the cavity and has an outer edge contacting the peripheral bearing surface (18). A retainer (19) is secured into the cavity internally of the o-ring (16), the retainer (19) having a sloped peripheral edge squeezing the o-ring against the peripheral bearing surface (18) such that the o-ring is deformed to substantially fill the cavity between the peripheral bearing surface and the sloped peripheral edge. A portion of the o-ring extends out of the cavity above the one face surface for forming a seal between the first and second face surfaces.

## Description

### CROSS REFERENCE TO RELATED APPLICATIONS

Not Applicable.

### STATEMENT REGARDING FEDERALLY SPONSORED RESEARCH

Not Applicable.

### BACKGROUND OF THE INVENTION

The present invention relates in general to valve seals, and, more specifically, to face-to-face sealing in a fluid valve, such as a pneumatic valve.

Face seals are formed in valves when two substantially flat surfaces are selectably brought together to block a fluid flow path. The surfaces may comprise metal or molded plastic, for example. One surface typically includes an orifice which is closed off when the surfaces are brought together. To augment the sealing, an elastomeric seal is typically retained on one surface to contact a valve seat area on the other surface concentrically around the orifice. The seal extends from the one surface and is compressed between the two surfaces during sealing.

An o-ring is a common type of seal used in various types of valves. Most commonly, o-rings are made of rubber or other elastomeric material in an toroidal shape. They are often inserted into an annular groove in a cylindrical surface to form a seal between a moving cylinder and a bore. O-rings are commercially available in many sizes and formed of many different compositions with a wide range of properties (e.g., temperature range, stability in different chemical environments, and elasticity). Due to the extensive use of o-rings, they are manufactured in high volumes. Consequently, the cost of an o-ring seal is low compared to other seals that are produced for more specialized sealing applications.

The use of o-rings in face seals has been fraught with difficulties in finding a method to retain the o-ring reliably and without relatively expensive machining or other manufacturing processes. Lacking an acceptable way of deploying an o-ring, many valve applications have used other seal shapes such as molded rubber discs with enlarged peripheral edges (i.e., an o-ring combined with a flat internal washer). However, such specially molded parts may be five to ten times as expensive as an o-ring.

In order to use a standard o-ring in a face seal, a groove has been formed in a sealing face with undercut sides such that the top of the groove has a narrower transverse width than the bottom of the groove and the o-ring can be trapped within the groove. Inserting the o-ring into the groove can be accomplished by adjusting one or both sides of the groove after inserting the o-ring (e.g., by rolling the edge of a metal valve body in which the groove is formed to close off the top of the groove) or by deforming the o-ring during insertion. However, rolling adds expense to the manufacturing process and can only be performed for metal components. Therefore, cheaper and lighter plastic molded parts cannot be assembled with an o-ring in this way. Also, when rolling an edge of a valve element to trap the o-ring, the groove for the o-ring must be fairly close to the edge of the element. Therefore, the strength of the groove sidewall is limited.

In the case of deforming (e.g., stretching) the o-ring during insertion, the top opening of the groove has to remain a large fraction of the o-ring thickness because the amount of deformation obtainable during insertion is limited. Thus, the retention of the o-ring may be less reliable than desired. Furthermore, the groove dimensions have not been easily matched to the shape of the o-ring, resulting in unoccupied space within the groove. When the valve is pressurized, a high pressure fluid in the valve may enter the unoccupied space. When the valve is later depressurized, the high pressure fluid in the unoccupied space behind the o-ring may dislodge the o-ring from the groove thereby causing the seal to fail.

### SUMMARY OF THE INVENTION

The present invention has the advantages of providing a low cost, high reliability face seal using an o-ring that avoids the foregoing problems of the prior art. Either machinable metal valve components or moldable plastic valve components can be used, although molded components are preferred.

In one aspect of the invention, a valve assembly comprises a movable valve element having a first face surface. A valve seat is provided having a second face surface for forming a face seal with the first face surface, wherein one of the first face surface and the second face surface includes a cavity sunk into the one face surface. The cavity has a peripheral bearing surface. An o-ring is inserted into the cavity and has an outer edge contacting the peripheral bearing surface. A retainer is secured into the cavity internally of the o-ring, the retainer having a sloped peripheral edge squeezing the o-ring against the peripheral bearing surface such that the o-ring is deformed to substantially fill the cavity between the peripheral bearing surface and the sloped peripheral edge. A portion of the o-ring extends out of the cavity above the one face surface for forming a seal between the first and second face surfaces.

### BRIEF DESCRIPTION OF THE DRAWINGS

Figure 1 is a cross-sectional view of a first embodiment of a valve utilizing the o-ring seal retention of the present invention.
Figure 2 is a cross-sectional view of a second embodiment of a valve utilizing the o-ring seal retention of the present invention.
Figure 3 is a cross-sectional view of an exemplary valve system utilizing the o-ring seal retention of the present invention.
Figure 4 is a side view of a movable valve element according to the present invention.
Figure 5 is a side, cross-sectional view of the movable valve element of Figure 4.
Figure 6 is a perspective view of the movable valve element of Figure 4.
Figure 7 is a side view of an o-ring retainer according to the present invention.
Figure 8 is a perspective view of the retainer of Figure 7.
Figure 9 is a side view of the movable valve element of Figure 4 assembled with an o-ring and the retainer of Figure 7, shown partially in phantom lines.
Figure 10 is a perspective view of the assembly of Figure 9.
Figure 11 is an exploded view of the assembly of Figure 9.
Figure 12 is a side, cross-sectional view of a retainer in an alternative embodiment.
Figure 13 is a side, cross-sectional view of an assembly including the retainer of Figure 12.
Figure 14 is a flowchart showing a preferred embodiment of the invention.

### DETAILED DESCRIPTION OF PREFERRED EMBODIMENTS

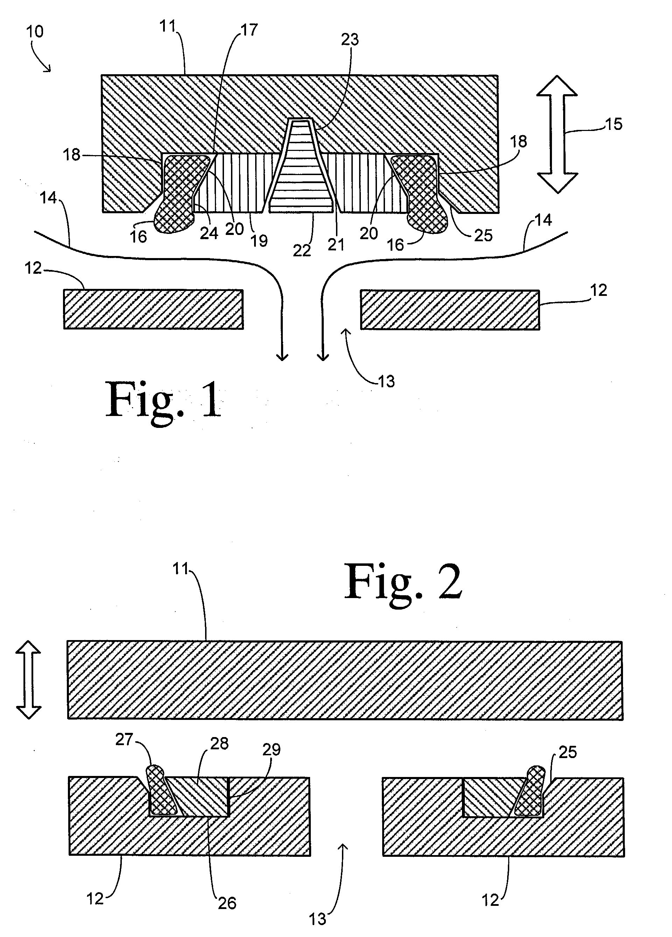

Referring to Figure 1, a valve 10 includes a movable valve element 11 and a fixed valve element 12 providing a valve seat and having an orifice 13 for receiving a fluid flow 14 controlled by the position of movable valve element 11, as shown by arrow 15. An o-ring 16 is captured within movable valve element 11 and forms a seal when seated against valve seat 12.

The structure for retaining o-ring 16 includes a bowl-shaped cavity 17 with a peripheral bearing surface 18. During assembly, o-ring 16 is inserted into cavity 17 such that its outer edge contacts the peripheral bearing surface. An o-ring retainer 19 is substantially disc-shaped to fit into cavity 17 internally of o-ring 16. Retainer 19 has a sloped peripheral edge 20 for squeezing o-ring 16 against the peripheral bearing surface of cavity 17. The diameter of o-ring 16 is preferably greater than the depth of cavity 17. The average distance between sloped peripheral edge 20 of retainer 19 and the peripheral bearing surface of cavity 17 is likewise smaller than the diameter of o-ring 16. Retainer 19 applies sufficient force to deform o-ring 16 so that it substantially fills the portion of cavity 17 between the peripheral bearing surface and peripheral edge 20. The deformation may additionally increase the extension of o-ring 16 outside of cavity 17 toward valve seat 12. Since the bottom side of o-ring 16 deforms to substantially fill the otherwise open area of cavity 17, it is not expected that any significant amount of high pressure fluid can enter that would tend to dislodge o-ring 16.

Retainer 19 can be attached to movable valve element 11 in any suitable manner. As shown in Figure 1, a screw hole 21 may be provided in retainer 19 for receiving a screw 22. A threaded aperture 23 in valve element 11 securably receives screw 22 to keep retainer 19 in place. Retainer 19 could also be affixed to element 11 by ultrasonic weld, adhesives, or press fitting, for example.

In order to avoid potential damage from o-ring 16 contacting any sharp edges, sloped edge 20 of retainer 19 ends in an unsloped (i.e., straight cylindrically-shaped) portion 24. In addition, a chamfer 25 is formed along the top, outside edge of cavity 17. Besides softening the contact edge of cavity 17, chamfer 25 provides a space into which some of o-ring 16 can be deflected when the face surfaces are brought together for sealing.

Sloped peripheral edge 20 preferably forms an angle with respect to the cavity peripheral bearing surface of between about 15° and 45°, and most preferably around 30° to provide optimal retention of o-ring 16. The peripheral bearing surface may be perpendicular to the sealing face, as shown, which allows the valve element to be molded from plastic and used without further modification. Alternatively, a molded plastic element can also be machined to provide a tapered wall or undercut. The sloped edge 20 would preferably be adjusted so that the angle made with the bearing surface remains about 30°.

As shown in Figure 2, the o-ring seal can alternatively be retained on the fixed (i.e., non-moving) face surface while the movable valve element provides the valve seat. Thus, a circular channel or groove 26 is formed in valve element 12 concentric with orifice 13. An o-ring 27 is deformably retained in groove 26 by a washer-shaped retainer 28 having a sloped edge for squeezing o-ring 27. Retainer 28 is fixed in groove 26 by an adhesive 29.

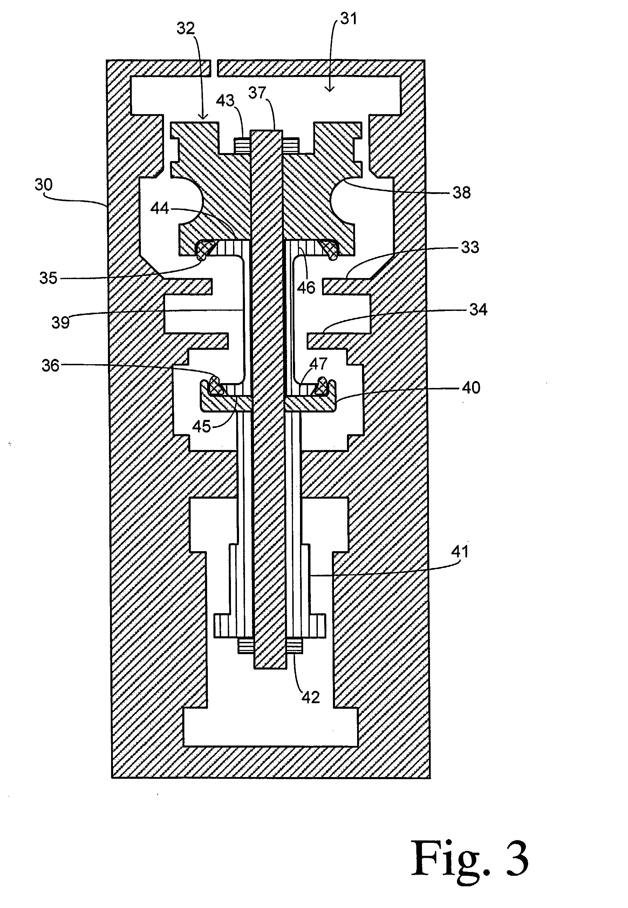

Figure 3 shows a control valve employing the seals of the present invention. A valve body 30 includes an irregularly shaped, generally cylindrical longitudinal bore 31 containing a movable valve assembly 32. Valve body 30 includes valve seats 33 and 34 for contacting o-rings 35 and 36, respectively, to form first and second poppets. Movable assembly 32 includes a valve stem 37 carrying o-rings 35 and 36, a first movable element 38, a double-ended retainer 39, a second movable element 40, a spacer 41, and nuts 42 and 43 for engaging threaded ends of stem 37 to hold the assembly together. Some spaces within bore 31 are connected to external valve ports (not shown) and a solenoid valve (not shown) may be used as a source of pilot pressure to selectably control the position of assembly 32, as is known in the art.

Movable valve elements 38 and 40 include cavities 44 and 45 for receiving o-rings 35 and 36, respectively. Double-ended retainer 39 includes first disc 46 and second disc 47 deformably retaining o-rings 35 and 36 when assembly 32 is clamped together by nuts 42 and 43. Thus, low cost, high reliability sealing is obtained in a control valve with face sealing poppets.

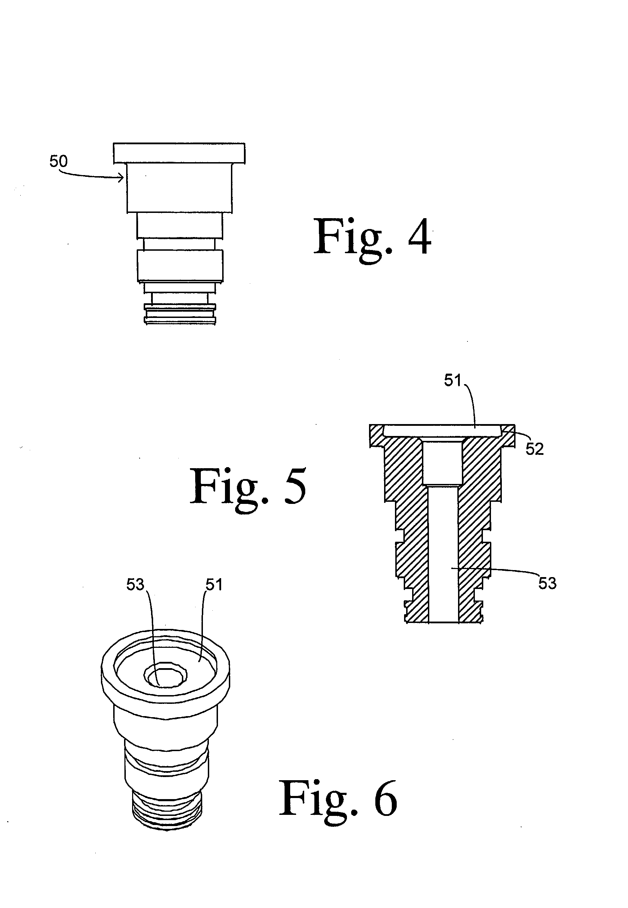

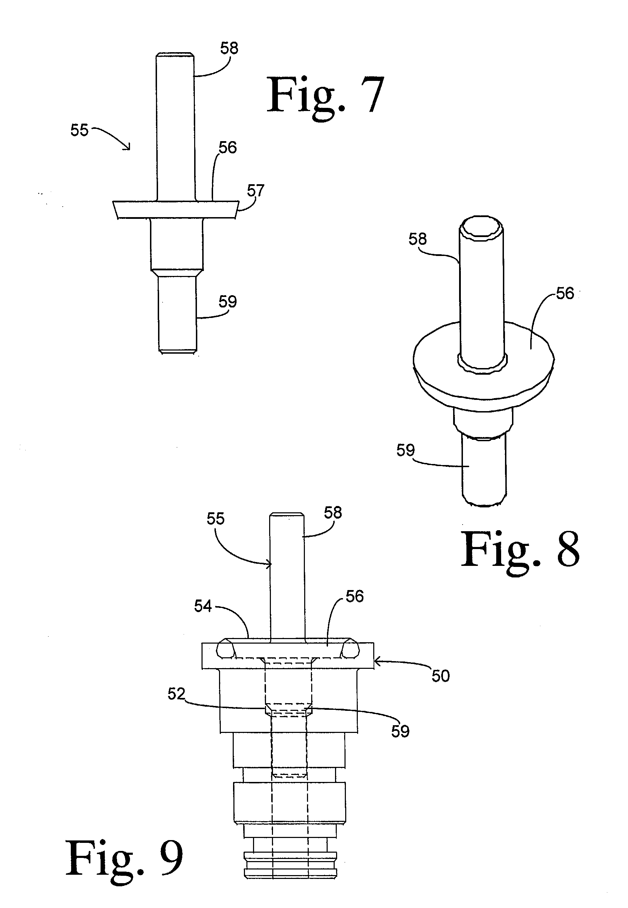

Figures 4-6 show a movable valve element 50 in an alternative embodiment. A cavity 51 is formed in the upper sealing surface of element 50. In this embodiment, element 50 may comprised a metal body having cavity 51 machined to provide an undercut 52. A bore 53 extends axially through valve element 50. Figures 7 and 8 show a retainer 55 for retaining an o-ring in cavity 51 of valve element 50 (shown in Figures 4-6). Retainer 55 includes a retention disc 56 with a sloped peripheral edge 57. Extending on opposite sides of disc 56 are a first stem portion 58 and a second stem portion 59.

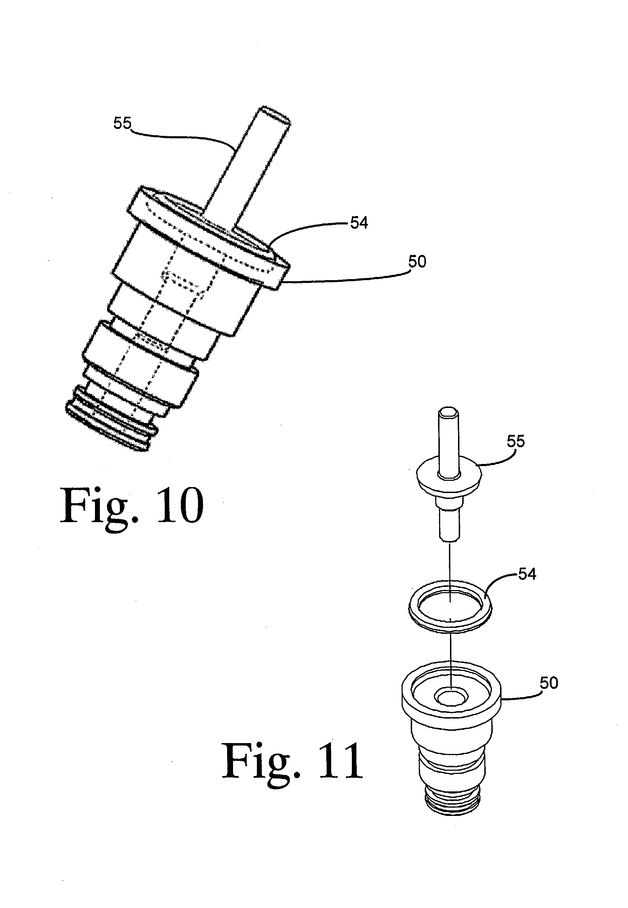

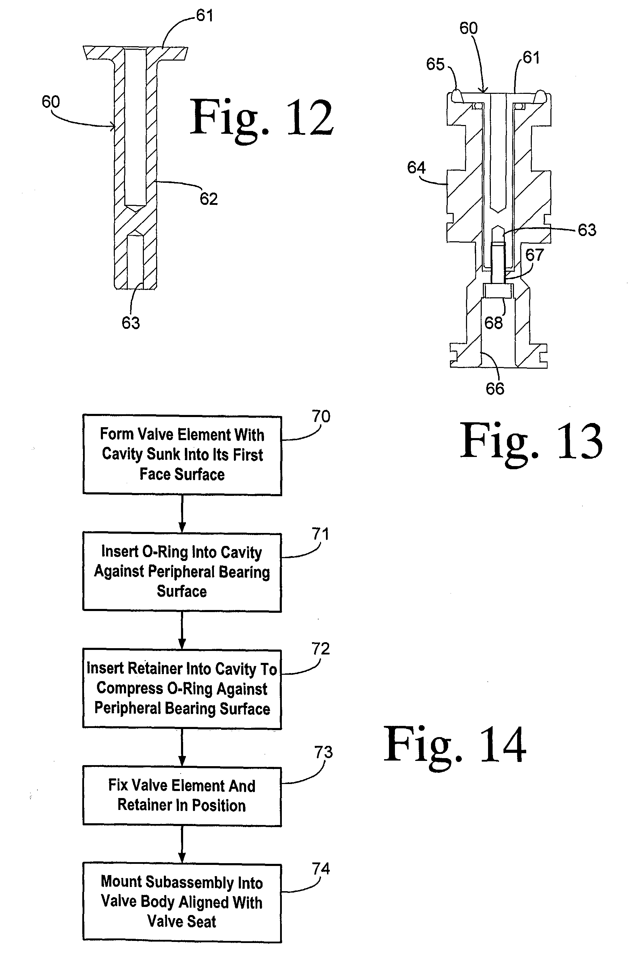

Figures 9 and 10 show an assembly comprising movable valve element 50 and retainer 55 entrapping an o-ring 54. Stem portion 59 extends part way into bore 52 and may be secured by gluing or other known means. Another stem section (not shown) can extend into bore 52 from the opposite side in forming a complete poppet assembly, for example. Figure 11 shows an exploded view of the assembly in Figures 9 and 10 with the shape of o-ring 54 being deformed from its natural toroidal shape.

Figure 12 shows yet another embodiment of an o-ring retainer 60 including a disc 61 and a stem extension 62. A screw receiving bore 63 is contained in stem extension 62. Figure 13 shows retainer 60 inserted into a central bore of a valve element 64 and retaining an o-ring 65 in the same manner as the previous embodiments. Valve element 64 includes a flanged end 66 with a screw hole 67 aligned with bore 63. A screw 68 passes through hole 67 into bore 63 and is tightened to secure retainer 60 to valve element 64, thereby deforming and entrapping o-ring 65.

Figure 14 illustrates a preferred method of the invention. In step 70, a valve element is formed with a cavity sunk into its first face surface. An o-ring is inserted into the cavity against the peripheral bearing surface of the cavity in step 71. In step 72, a retainer is inserted into the cavity to compress and deform the o-ring against the peripheral bearing surface. The valve element and retainer are fixed in position in step 73 by mechanical means (e.g., screwing, staking, press fitting, welding) or by chemical bonding. In step 74, the subassembly of the movable valve element, o-ring, and retainer is mounted into a valve body in alignment with a valve seat.

## Claims

1. A valve assembly comprising:
a movable valve element having a first face surface;
a valve seat having a second face surface for forming a face seal with said first face surface, wherein one of said first face surface and said second face surface includes a cavity sunk into said one face surface, said cavity having a peripheral bearing surface;
an o-ring inserted into said cavity and having an outer edge contacting said peripheral bearing surface; and
a retainer secured into said cavity internally of said o-ring, said retainer having a sloped peripheral edge squeezing said o-ring against said peripheral bearing surface, wherein said o-ring is deformed to substantially fill said cavity between said peripheral bearing surface and said sloped peripheral edge, and wherein a portion of said o-ring extends out of said cavity above said one face surface for forming a seal between said first and second face surfaces.

2. The valve assembly of claim 1 wherein said retainer has an unsloped peripheral edge portion adjacent to said sloped peripheral edge.

3. The valve assembly of claim 1 wherein said cavity includes a chamfered edge adjacent to said peripheral bearing surface, some of said o-ring being deflected into a space adjacent said chamfered edge when said face surfaces are brought together for sealing.

4. The valve assembly of claim 1 wherein said movable valve element comprises a piston.

5. The valve assembly of claim 1 wherein said movable valve element comprises a poppet.

6. The valve assembly of claim 1 wherein said cavity is sunk into said first face surface of said movable valve element.

7. The valve assembly of claim 6 wherein said movable valve element is comprised of a molded resin.

8. The valve assembly of claim 7 wherein said peripheral bearing surface is substantially perpendicular to said first face surface.

9. The valve assembly of claim 8 wherein said sloped peripheral edge of said retainer is inclined from said peripheral bearing surface at an angle of about 30°.

10. The valve assembly of claim 1 wherein said retainer is comprised of molded resin.

11. The valve assembly of claim 1 further comprising a valve stem extending coaxially with said movable valve element and said retainer, said movable valve element and said retainer being compressed together on said valve stem.

12. The valve assembly of claim 1 wherein said o-ring is toroidal, wherein said peripheral bearing surface is cylindrical, and wherein said retainer is disc-shaped.

13. The valve assembly of claim 1 wherein said o-ring is comprised of elastomeric material.

14. A valve assembly comprising:
a movable valve element having a first face surface with a cavity sunk therein, said cavity having a cylindrical peripheral bearing surface;
a valve seat having a second face surface for forming a face seal with said first face surface;
an o-ring inserted into said cavity and having an outer edge contacting said peripheral bearing surface; and
a disc-shaped retainer secured into said cavity internally of said o-ring, said disc-shaped retainer having a sloped peripheral edge squeezing said o-ring against said peripheral bearing surface, wherein said o-ring is deformed to substantially fill said cavity between said peripheral bearing surface and said sloped peripheral edge, and wherein a portion of said o-ring extends out of said cavity above said first face surface for forming a seal between said first and second face surfaces.

15. A method of providing a face seal in a valve assembly, comprising the steps of:
forming a movable valve element having a first face surface for sealing against a valve seat with a second face surface and having a cavity sunk therein, said cavity having a peripheral bearing surface;
inserting an o-ring into said cavity such that an outer edge of said o-ring is proximate to said peripheral bearing surface; and
inserting a retainer into said cavity internally of said o-ring so that a sloped peripheral edge of said retainer squeezes said o-ring against said peripheral bearing surface to deform said o-ring to substantially fill said cavity between said peripheral bearing surface and said peripheral edge and so that a portion of said o-ring extends out of said cavity above said first face surface for forming a seal between said first and second face surfaces.

16. The method of claim 15 further comprising the step of:
providing a valve stem coaxial with said movable valve element and said retainer; and
mounting at least one of said movable valve element and said retainer on said valve stem to compress said movable valve element and said retainer together.

17. The method of claim 15 further comprising the step of:
inserting said movable valve element with said o-ring and said retainer into a valve body so that said o-ring is selectably positionable against said valve seat.
